# EUROPÄISCHE PATENTSCHRIFT

(11) **EP 2 715 862 B1**
(45) Veröffentlichungstag und Bekanntmachung des Hinweises auf die Patenterteilung: **04.03.2015**
(21) Anmeldenummer: 12722304.8
(22) Anmeldetag: 18.05.2012
(51) Int. Cl.: H01M 10/60

(54) **BATTERIE FÜR EIN FAHRZEUG UND VERFAHREN ZUM FERTIGEN EINER BATTERIE**
BATTERY FOR A VEHICLE, AND METHOD FOR PRODUCING A BATTERY
BATTERIE POUR VÉHICULE, ET PROCÉDÉ DE PRODUCTION D'UNE BATTERIE

(30) Priorität: 28.05.2011 DE 102011102765
(43) Veröffentlichungstag der Anmeldung: 09.04.2014
(73) Patentinhaber: Audi AG, 85045 Ingolstadt (DE)
(72) Erfinder: FEES, Heiner, 74321 Bietigheim-Bissingen (DE); TRACK, Andreas, 74343 Sachsenheim (DE); MAISCH, Ralf, 74232 Abstatt (DE)
(74) Vertreter: Herbst, Matthias Heinz
(86) Internationale Anmeldenummer: PCT/EP2012/002130
(87) Internationale Veröffentlichungsnummer: WO 2012/163484

(56) Entgegenhaltungen:
- DE-A1-102007 010 739
- DE-A1-102007 010 745
- DE-A1-102008 059 953
- DE-A1-102008 059 971
- US-A1- 2007 259 258

## Beschreibung

Die Erfindung betrifft eine Batterie für ein Fahrzeug, wobei eine Mehrzahl von Batteriezellen in einem Gehäuse der Batterie angeordnet ist. Die Batterie umfasst eine Kühleinrichtung zum Abführen von Wärme von den Batteriezellen. In einen zwischen dem Gehäuse und der Kühleinrichtung vorgesehenen Zwischenraum ist ein Material eingebracht, welches in einem Grundzustand ein erstes Volumen und in einem expandierten Zustand ein gegenüber dem ersten Volumen vergrößertes Volumen einnimmt. Die Kühleinrichtung ist durch das in seinen expandierten Zustand verbrachte Material gegen die Batteriezellen gepresst. Des Weiteren betrifft die Erfindung ein Verfahren zum Fertigen einer solchen Batterie.

Die DE 10 2007 010 745 A1 beschreibt eine Batterie für ein Fahrzeug mit einer Mehrzahl von Batteriezellen, welche in einem Batteriegehäuse angeordnet sind. Auf den Batteriezellen ist kopfseitig eine Wärmeleitplatte mit Kühlkanälen für ein Wärmeleitmedium angeordnet. Zwischen Zellenverbindern und der Wärmeleitplatte ist ein wärmeleitfähiger Schaum, etwa ein Polyurethan-Schaum angeordnet. Dieses Material füllt Zwischenräume im Batteriegehäuse aus und sorgt auch dafür, dass die Kühlplatte mit einem in Richtung der Batteriezellen wirkenden Druck beaufschlagt ist.

Auch bei der DE 10 2007 010 739 A1 sind Batteriezellen einer Batterie für ein Fahrzeug in einem Gehäuse angeordnet, und eine Wärmeleitplatte mit Kühlkanälen ist kopfseitig auf den Batteriezellen angeordnet. Auch hier sind jegliche Zwischenräume in dem Gehäuse der Batterie, insbesondere ein Zwischenraum zwischen oberhalb der Wärmeleitplatte angeordneten Zellenverbindern und der Wärmeleitplatte mit einer Vergussmasse etwa in Form eines wärmeleitenden Polyurethan-Schaums ausgefüllt.

Die DE 10 2008 059 097 A1 beschreibt ebenfalls eine Batterie für ein Fahrzeug mit einer Mehrzahl von in einem Batteriegehäuse angeordneten Batteriezellen, wobei zwischen einem Batteriegehäusedeckel und einer oberseitig auf den Batteriezellen angebrachten Kühlplatte als Schutzschicht eine Vergussmasse vorgesehen ist, welche beispielsweise aus einem Schaumstoff gebildet ist. Jedoch wird hier nicht die Kühlplatte durch ein Expandieren der Vergussmasse gegen die Batteriezellen gedrückt, da ein die Batteriezellen umfassender Zellenverbund in dem Batteriegehäusedeckel auf den Kopf gestellt und dann der Batteriegehäusedeckel hinreichend weit mit Vergussmasse aufgefüllt wird. Die Vergussmasse wird also in das offene Gehäuse eingefüllt.

Die US 2007/0259258 A1 beschreibt eine Batterie für ein Fahrzeug mit einer Mehrzahl von Batteriezellen in einem Gehäuse, wobei die jeweiligen Batteriezellen in dem Gehäuse mit Kühlplatten in Anlage sind, welche teilweise durch die Gehäusewand hindurch treten. In das geschlossene Gehäuse wird ein Schaum, beispielsweise ein Zweikomponenten-Polyurethan-Schaum über Öffnungen eingebracht.

Die DE 10 2008 059 953 A1 beschreibt eine Batterie für ein Fahrzeug mit einer Kühlplatte, welche Kanäle für eine Kühlflüssigkeit aufweist. Auf der Kühlplatte stehen Batteriezellen auf, und die Batteriezellen und die Kühlplatte werden miteinander durch ein Spannband verspannt. Zwischen einer unter dem Spannband angeordneten Spannplatte und einem der Kühlplatte gegenüberliegenden Ende der Batteriezellen ist ein elastisches Element beispielsweise eine Schaummatte oder eine Mehrzahl von Federn angeordnet. Dieses elastische Element presst die Batteriezellen gegen die Kühlplatte.

Die DE 10 2007 021 293 A1 beschreibt eine Batterie für ein Elektrofahrzeug, Brennstoffzellenfahrzeug oder Hybridfahrzeug. Einzelne Batteriezellen, welche zu einem Zellenpaket zusammengefasst sind, sind nach außen hin von einem gemeinsamen Gehäuse aus Kunststoff umgeben. Das Gehäuse umfasst einen einseitig offenen Behälter und einen den Behälter verschließenden Deckel, welche beide durch Spritzgießen gefertigt sind. Um sicherzustellen, dass die Batteriezellen lagefest und ohne Spiel im Gehäuse befestigt sind, sind am Boden und am Deckel des Gehäuses Positioniervorsprünge vorgesehen, welche Bereiche mit unterschiedlicher Elastizität aufweisen. Der weichere Bereich eines jeweiligen Positioniervorsprungs ermöglicht es, Fertigungstoleranzen der Batteriezellen zu kompensieren. Zum Kühlen der Batteriezellen sind in dem Gehäuse Rohre vorgesehen, welche mit einem Kühlfluid beaufschlagt werden. An den Rohren sind zahlreiche dünne Lamellen befestigt, welche dem Abführen von Wärme von den Batteriezellen dienen. Die Lamellen sind in ihrer Form an die jeweilige Batteriezelle angepasst, wobei eine jeweilige Batteriezelle in einem Aufnahmeraum aufgenommen ist, welcher durch eine oder mehrere Lamellen gebildet ist.

Die DE 10 2009 004 543 A1 beschreibt eine Fahrzeugbatterie mit Rundzellen, welche zwischen zwei Kühlerwänden angeordnet sind. In den Kühlerwänden sind Kühlkanäle für ein Kühlmittel vorgesehen. Zwischen den Batteriezellen sind Profilelemente aus einem wärmeleitenden Material vorgesehen, sodass über die Profilelemente ein Wärmeübergang zwischen den Rundzellen ermöglicht ist. Spanneinrichtungen spannen die beiden Kühler wände zusammen, sodass diese mit vergleichsweise großer Kraft gegen die Profilteile und die Rundzellen gedrückt werden.

Die EP 2 065 963 A2 beschreibt eine Batterie für ein Fahrzeug, bei welcher eine Mehrzahl von Batteriezellen einen Batterieblock bilden. Eine Kühlplatte ist in thermischem Kontakt mit einem Boden des Batterieblocks. Die Kühlplatte weist einen Hohlraum auf, in welchem Kühlrohre angeordnet sind. Die quaderförmige Kühlplatte mit dem Hohlraum umfasst eine oberseitige Wand, welche mit dem Boden des Batterieblocks in Anlage ist. Die Expansion eines in den Hohlraum eingebrachte Kunststoffschaums führt dazu, dass die Kühlrohre in innigen Kontakt mit der oberen Wand der Kühlplatte gelangen.

Bei diesen aus dem Stand der Technik bekannten Batterien ist es vergleichsweise aufwändig, die Kühleinrichtung in einen gut wärmeleitenden Kontakt mit den Batteriezellen zu bringen.

Aufgabe der vorliegenden Erfindung ist es daher, eine Batterie der eingangs genannten Art sowie ein Verfahren zum Fertigen einer solchen Batterie zu schaffen, bei welcher auf besonders einfache Art und Weise für eine gute Wärmeabfuhr im Kühlbetrieb gesorgt ist.

Diese Aufgabe wird durch eine Batterie mit den Merkmalen des Patentanspruchs 1 und durch ein Verfahren mit den Merkmalen des Patentanspruchs 7 gelöst. Vorteilhafte Ausgestaltungen mit zweckmäßigen Weiterbildungen der Erfindung sind in den abhängigen Patentansprüchen angegeben.

Bei der erfindungsgemäßen Batterie ist zwischen das Gehäuse und die Kühleinrichtung ein Material eingebracht, welches in einem Grundzustand ein erstes Volumen und in einem expandierten Zustand ein gegenüber dem ersten Volumen vergrößertes Volumen einnimmt. Durch das in seinen expandierten Zustand verbrachte Material ist die Kühleinrichtung gegen die Batteriezellen gepresst. Durch ein solches, auch als Expansionsmittel bezeichenbares Material kann eine besonders gute Anlage der Kühleinrichtung an den Batteriezellen erreicht werden. Dies führt wiederum im Betrieb der Kühleinrichtung zu einer besonders guten Abfuhr der von den Batteriezellen freigesetzten Wärme.

Das Einbringen des Expansionsmittels in einen zwischen dem Gehäuse und der Kühleinrichtung vorgesehenen Zwischenraum ist zudem besonders einfach zu bewerkstelligen, sodass sich die Batterie besonders aufwandsarm fertigen lässt. Die nach dem Einbringen zwischen das Gehäuse und die Kühleinrichtung erfolgende Volumenzunahme des Expansionsmittels sorgt für einen großen Anpressdruck, mit welchem die Kühleinrichtung mit den Batteriezellen in Anlage gebracht wird.

Hierbei ist zumindest eine Wand des Gehäuses der Batterie durch Separatoren gebildet, welche die Batteriezellen elektrisch voneinander isolieren. Wenn die ohnehin zur Potentialtrennung vorgesehenen Separatoren zugleich das Gehäuse der Batterie bilden, lässt sich die Batterie besonders einfach fertigen. Die Separatoren können hier insbesondere derart miteinander verbunden sein, dass die zumindest eine Wand des Gehäuses gegenüber Wasser und/oder Feuchtigkeit, insbesondere Luftfeuchtigkeit, hermetisch dicht ist. Dies kann beispielsweise durch Verkleben der Separatoren miteinander sichergestellt werden.

Zudem ist erfindungsgemäß durch die zumindest eine Wand wenigstens ein Aufnahmeraum für die Kühleinrichtung gebildet. Dann braucht bei der Fertigung der Batterie die Kühleinrichtung lediglich in den Aufnahmeraum eingebracht zu werden, welcher durch das Montieren der Separatoren gebildet ist. Anschließend sorgt dann das in den Aufnahmeraum eingebrachte Expansionsmittel dafür, dass die Kühleinrichtung mit einem entsprechend großen Anpressdruck gegen die Batteriezellen gedrückt wird.

In einer vorteilhaften Ausgestaltung der Erfindung ist das Material als in seinem expandierten und ausgehärteten Zustand unnachgiebiger Schaumstoff ausgebildet. Ein solcher Schaumstoff, etwa in Form eines Montageschaums, kann besonders einfach zwischen das Gehäuse und die Kühleinrichtung eingebracht werden. Der Montageschaum ist beispielsweise als Einkomponenten-Montageschaum oder als Zweikomponenten-Montageschaum kostengünstig bereitstellbar und leicht zu handhaben.

Bevorzugt umfasst die Kühleinrichtung wenigstens ein von einem Kühlmittel durchströmbares Profilteil. Ein solches Profilteil kann besonders einfach und kostengünstig durch Strangpressen gebildet werden, und im Betrieb der Kühleinrichtung sorgt das Kühlmittel für eine besonders effiziente Wärmeabfuhr.

Hierbei hat es sich als vorteilhaft gezeigt, wenn zwischen dem wenigstens einen Profilteil und einer Hülle der jeweiligen Batteriezelle Wärmeleitpaste angeordnet ist. Dadurch können nämlich Fertigungstoleranzen der Batteriezellen und/oder der Kühleinrichtung und/oder des Gehäuses besonders gut ausgeglichen werden. Die Wärmeleitpaste sorgt zudem für eine flächige Anlage der Kühleinrichtung an den Batteriezellen und verhindert das Auftreten von thermisch isolierender Luft zwischen der Hülle der Batteriezellen und der Kühleinrichtung.

Zusätzlich oder alternativ kann ein wärmeleitender Klebstoff zwischen dem Profilteil und den Hüllen der Batteriezellen angeordnet sein. Dann ist nicht nur im Kühlbetrieb eine besonders gute Wärmeübertragung von den Batteriezellen auf das Kühlmedium sichergestellt, sondern zudem ein besonders sicherer Halt der Profilteile an den Hüllen der Batteriezellen.

In einer weiteren vorteilhaften Ausgestaltung ist das wenigstens eine Profilteil aus einer Aluminiumlegierung gebildet. Dieses Material sorgt für einen besonders guten Wärmeübergang von den Batteriezellen auf das Kühlmittel. Zudem ist ein Profilteil aus einer Aluminiumlegierung von einem vorteilhaft geringen Gewicht.

Das Profilteil kann auch aus einem zerstörungsfrei biegbaren Kunststoff gebildet sein. Es können auch in der Batterie wenigstens ein Profilteil aus einer Aluminiumlegierung und wenigstens ein Profilteil aus einem Kunststoff zum Einsatz kommen. Wenn die Batterie ein Profilteil aus dem zerstörungsfrei verformbaren, insbesondere elastischen, Kunststoff aufweist, so ist die Gefahr einer Beschädigung des Profilteils bei einer unfallbedingten Kraftbeaufschlagung der Batterie besonders gering. Es kann also bei der unfallbedingten Kraftbeaufschlagung zu einer Verschiebung der Batteriezellen relativ zu der Kühleinrichtung kommen, ohne dass das Profilteil knickt oder bricht. Dadurch kann ein Austreten des Kühlmittels aus der Kühleinrichtung besonders weitgehend verhindert werden.

Zudem ergibt sich bei der Verwendung von Kunststoff für das Profilteil aufgrund des im Vergleich zu Metall niedrigeren Wärmeübergangskoeffizienten eine gleichmäßigere Wärmeabfuhr über die gesamte Batterie. Bei einem Profilteil mit einem großen Wärmeübergangskoeffizienten wird nämlich das Kühlmittel von den stromaufwärts angeordneten Batteriezellen bereits vergleichsweise stark erwärmt, sodass dann für die stromabwärts angeordneten Batteriezellen eine geringere. Temperaturdifferenz zwischen dem Kühlmittel und den Batteriezellen und somit eine weniger effiziente Wärmeabfuhr gegeben ist.

Bei dem erfindungsgemäßen Verfahren zum Fertigen einer Batterie für ein Fahrzeug wird eine Mehrzahl von Batteriezellen in einem Gehäuse der Batterie angeordnet. Zudem wird in dem Gehäuse eine zum Abführen von Wärme von den Batteriezellen ausgelegte Kühleinrichtung angeordnet. Anschließend wird in einen zwischen dem Gehäuse und der Kühleinrichtung vorgesehenen Zwischenraum ein Material eingebracht, wobei durch eine Volumenzunahme des Materials die Kühleinrichtung gegen die Batteriezellen gepresst wird.

Zumindest eine Wand des Gehäuses der Batterie ist durch Separatoren gebildet, welche die Batteriezellen elektrisch voneinander isolieren. Durch die zumindest eine Wand ist wenigstens ein Aufnahmeraum für die Kühleinrichtung gebildet, in welchen die Kühleinrichtung eingebracht wird. Durch eine derart mit den Batteriezellen in Anlage gebrachte Kühleinrichtung lässt sich im Kühlbetrieb eine besonders effiziente Abfuhr von Wärme der Batteriezeilen erreichen.

Die für die erfindungsgemäße Batterie beschriebenen Vorteile und bevorzugten Ausführungsformen gelten auch für das erfindungsgemäße Verfahren zum Fertigen einer Batterie.

Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Weitere Vorteile, Merkmale und Einzelheiten der Erfindung ergeben sich aus den Ansprüchen, der nachfolgenden Beschreibung bevorzugter Ausführungsformen sowie anhand der Zeichnungen. Dabei zeigen:
- Fig. 1: eine Perspektivansicht einer Batterie zum Speichern und Freigeben von Antriebsenergie für ein Fahrzeug;
- Fig. 2: in einer Perspektivansicht einen Separator, welcher zwei Batteriezellen der Batterie elektrisch voneinander isoliert;
- Fig. 3: eine Schnittansicht durch die Batterie gemäß Fig. 1;
- Fig. 4: einen Deckel der Batterie in einer Ansicht von unten, welcher ein durch die Separatoren gebildetes Gehäuse für die Batteriezellen nach oben hin abschließt;
- Fig. 5: den Deckel gemäß Fig. 4 in einer Draufsicht; und
- Fig. 6: ausschnittsweise die Batterie gemäß Fig. 1 in einer weiteren Schnittansicht.

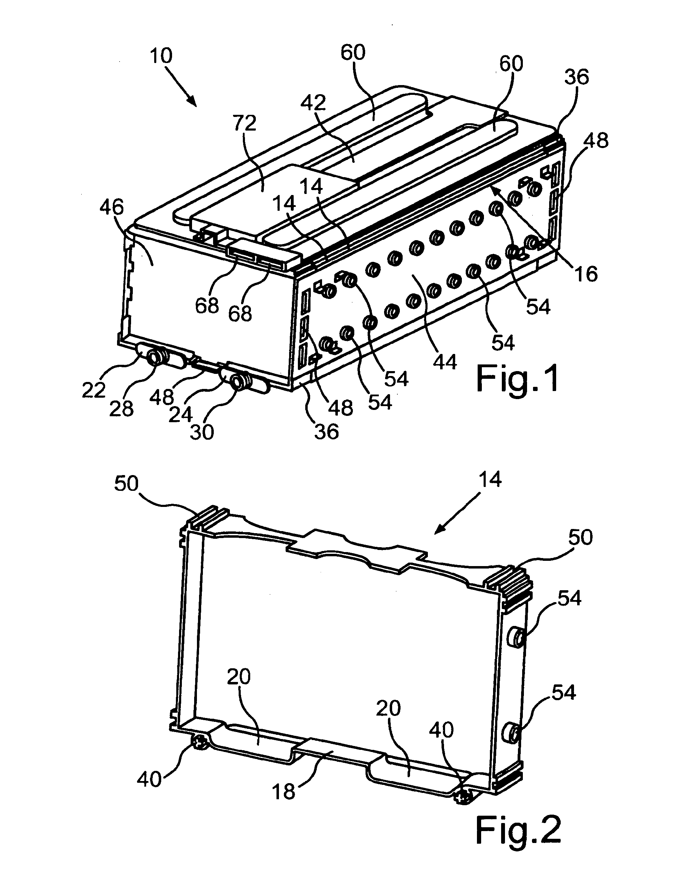

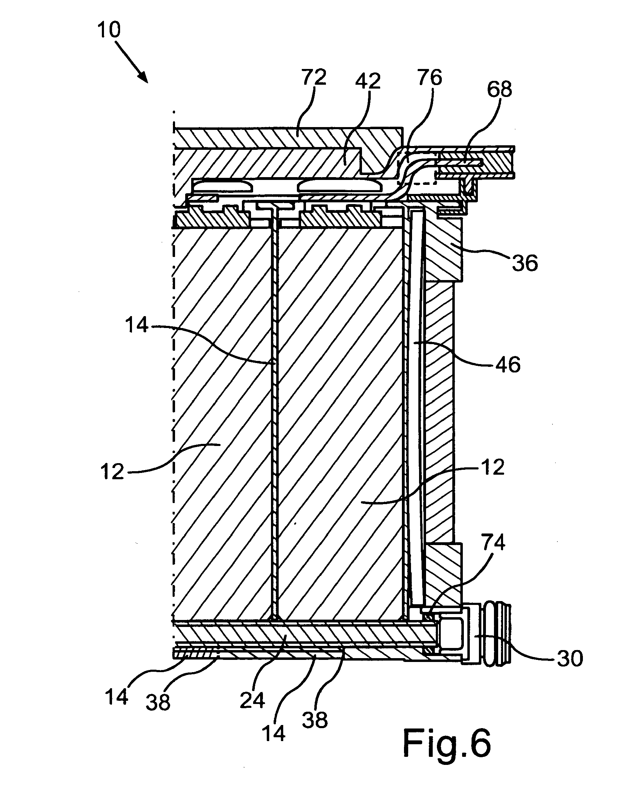

Eine in Fig. 1 gezeigte Batterie 10 für ein Fahrzeug ist beispielsweise als Lithium-tonen-Batterie ausgebildet. Die Batterie 10 umfasst eine Mehrzahl von Batteriezellen 12, welche durch aus einem Kunststoff gebildete Separatoren 14, welche auch als Spacer bezeichnet werden, voneinander elektrisch isoliert sind (vgl. Fig. 6). Die vorliegend prismatischen Batteriezellen 12 bilden einen Stapel.

Die Separatoren 14, welche durch Kleben miteinander verbunden sind, bilden Seitenwände 16 und eine Bodenplatte 18 (vgl. Fig. 2) eines Gehäuses der Batterie 10, in welchem der Stapel der Batteriezellen 12 aufgenommen ist. Im Bereich der durch die Separatoren 14 gebildeten Bodenplatte 18 des Gehäuses sind durch die Separatoren 14 zwei Durchlässe 20 gebildet (vgl. Fig. 2), in welchen zwei Profilteile 22, 24 einer Kühleinrichtung aufgenommen sind (vgl. Fig. 1).

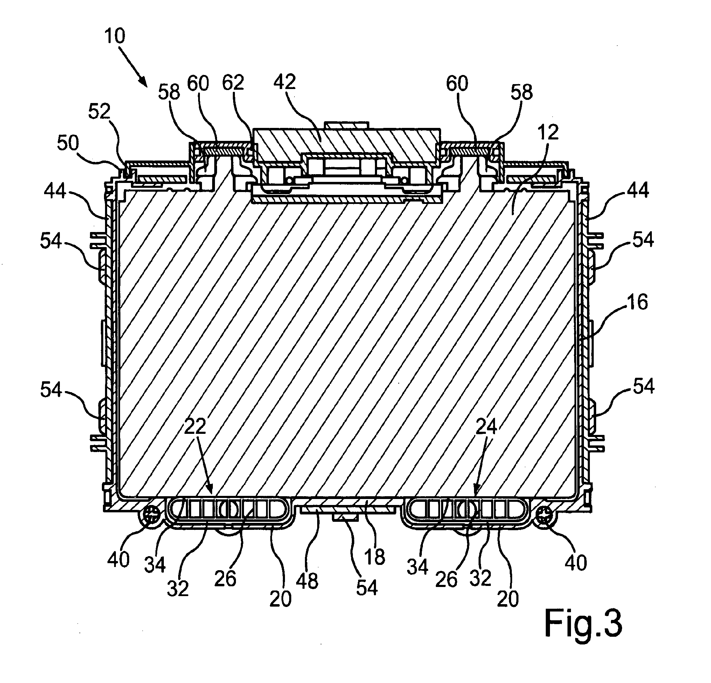

Die Profilteile 22, 24 sind als von einem Kühlmittel durchströmbare Flachrohre ausgebildet, in welchen durch Rippen 26 eine Mehrzahl von zueinander parallelen Kühlkanälen gebildet sind (vgl. Fig. 3). An einem ersten der Profilteile 22 ist ein Kühlmittelanschluss 28 angeordnet, über welchen das Kühlmittel dem Profilteil 22 zugeführt wird. Ein an dem zweiten Profilteil 24 vorgesehener Kühlmittelanschluss 30 dient dem Wegführen des erwärmten Kühlmittels von der Batterie 10 hin zu einem (nicht gezeigten) Kühler.

Insbesondere aus Fig. 3 ist ersichtlich, dass eine Höhe der Profilteile 22, 24 etwas geringer ist als eine Höhe der die Profilteile 22, 24 aufnehmenden Durchlässe 20. In einem Zwischenraum zwischen der durch die Separatoren 14 gebildeten Bodenplatte 18 und den Profilteilen 22, 24 ist im Bereich der Durchlässe 20 ein Montageschaum 32 angeordnet.

Der Montageschaum 32 wird bei der Fertigung der Batterie 10 nach dem Einführen der Profilteile 22, 24 in die Durchlässe 20 in die Durchlässe 20 eingebracht. Durch die sich beim Expandieren des Montageschaums 32 ergebende Volumenzunahme des Montageschaums 32 sorgt dieser dafür, dass die Profilteile 22, 24 mit großer Anpresskraft gegen die Hüllen der Batteriezellen 12 gedrückt werden. Der expandierte, ausgehärtete Montageschaum 32 sorgt dafür, dass die große Anpresskraft dauerhaft aufrechterhalten wird.

Zum Toleranzausgleich und zur Sicherstellung eines besonders guten, flächigen Wärmeübergangs zwischen den Profilteilen 22, 24 und den Batteriezellen 12 ist zudem zwischen den Profilteilen 22, 24 und den Batteriezellen 12 eine Schicht Wärmeleitpaste 34 vorgesehen.

Die Profilteile 22, 24 können aus einer Aluminiumlegierung gebildet sein. Alternativ können die Profilteile 22, 24 aus einem flexiblen, zerstörungsfrei biegbaren Kunststoff gebildet sein, sodass selbst bei einer unfallbedingten Kraftbeaufschlagung der Batterie 10 die Profilteile 22, 24 nicht knicken oder brechen und es zu keinem Austritt von Kühlflüssigkeit aus den Profilteilen 22, 24 kommt.

Bei der Verwendung von Kunststoff für die Profilteile 22, 24 ist zudem eine besonders gleichmäßige Wärmeabfuhr von den Batteriezellen 12 gegeben, da aufgrund des vergleichsweise geringen Wärmeübergangskoeffizienten von Kunststoff nicht bereits aus den - in Strömungsrichtung des Kühlmittels durch den Kühlmittelanschluss 28 gesehen - stromaufwärts angeordneten Batteriezellen 12 ein großer Wärmeeintrag in das Kühlmittel erfolgt.

Das Gehäuse für den Stapel der Batteriezellen 12 ist durch die zwischen jeweils zwei Batteriezellen 12 angeordneten Separatoren 14 und zwei den Stapel der Batteriezellen 12 endseitig abschließende Separatoren 36 gebildet (vgl. Fig. 1). Die aus einem eigensteifen Kunststoff gebildeten Separatoren 14, 36 sind in jeweiligen Anlagebereichen 38 miteinander verklebt (vgl. Fig. 6).

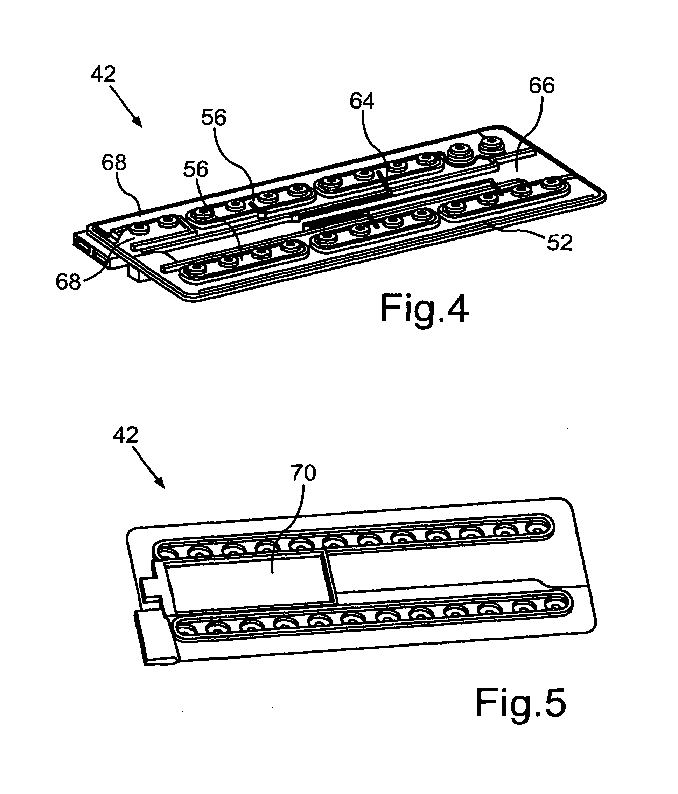

Zusätzlich sorgen in den Anlagebereichen 38 vorgesehene Formschlusselemente, beispielsweise in Fig. 3 gezeigte Zapfen 40, und mit diesen korrespondierende Vertiefungen in den Separatoren 14, 36 für eine lagerichtige Anordnung der Separatoren 14, 36 aneinander. Die miteinander verklebten Separatoren 14, 36 bilden ein den Stapel der Batteriezellen 12 zu fünf Seiten hin hermetisch abschließendes Gehäuse, und ein Deckel 42 (vgl. Fig. 4) schließt das Gehäuse nach oben hin gegen Wasser und Feuchtigkeit dicht ab.

Der Zusammenhalt des Gehäuses ist durch Seitenplatten 44 und Endplatten 46 gewährleistet (vgl. Fig. 1), welche das Gehäuse außenumfangsseitig umgeben. Hierbei sind an den, insbesondere aus einem Federstahl gebildeten, Endplatten 46 ausgebildete Zungen 48 in entsprechende, in den Seitenplatten 44 vorgesehene, Laschen eingeführt. Eine weitere Fixierplatte 48 verläuft bodenseitig und zwar zwischen den beiden Profilteilen 22, 24 von der in Fig. 1 vorderen Endplatte 46 bis zur hinteren Endplatte und ist ebenfalls an den Endplatten 46 fixiert.

Die zusammengefügten Separatoren 14 bilden Führungsschienen 50 für an dem Deckel 42 vorgesehene Rastnasen 52 (vgl. Fig. 3). Die Rastnasen 52 sind in den Führungsschienen 50 mit einem elastischen und abdichtenden Klebstoff verklebt (vgl. Fig. 4). So ist das Gehäuse für den Stapel der Batteriezellen 12 auch nach oben hin dicht.

Mit den Separatoren 14 sind einstückig Dome 54 oder Buchsen ausgebildet, welche durch entsprechende Durchtrittsöffnungen in den Seitenplatten 44 bzw. in der Fixierplatte 48 hindurchtreten (vgl. Fig. 3). So sorgen die Seitenplatten 44 und die Fixierplatte 48 für das Einhalten vorbestimmter Abstände zwischen den Separatoren 14 (vgl. Fig. 1). Die Dome 54 werden nach dem Einbringen derselben in die Durchtrittsöffnungen heißverstemmt, um eine sichere Halterung der Seitenplatten 44 und der Fixierplatte 48 zu erreichen.

In den Deckel 42 sind Sammelschienen 56 integriert, über welche Pole der Batteriezellen 12 elektrisch kontaktiert werden. Hierfür können die Sammelschienen 56 durch Schrauben 58 (vgl. Fig. 3) mit den Polen der Batteriezellen 12 verbunden werden. Alternativ ist es möglich, die Sammelschienen 56 mit den Polen der Batteriezellen 12 zu verschweißen. Eine Abdeckung 60, welche über eine Dichtung 62 gegenüber einem Grundkörper des Deckels 42 abgedichtet ist, sorgt dafür, dass die Schrauben 58 und die Sammelschienen 52 nach oben gegen ein Eindringen von Feuchtigkeit oder Wasser geschützt sind.

In den Deckel 42 sind des Weiteren Leitungen 64 integriert, über welche die Spannung der Batteriezellen 12 erfasst wird. Zudem ist in dem Deckel 42 ein Kanal 66 vorgesehen, durch welchen im Fehlerfall aus den Batteriezellen 12 austretende heiße Gase abgeleitet werden. Über zwei in den Deckel 42 integrierte Hochvoltanschlüsse 68 kann aus der Batterie 10 elektrische Energie für einen Antriebsmotor des Fahrzeugs entnommen bzw. in die Batterie 10 eingebracht werden.

In einem Bereich des Deckels 42, in welchem ein als Kontaktzunge ausgebildetes Ende des Hochvoltanschlusses 68 angeordnet ist, kann eine abdichtende Vergussmasse 76 vorgesehen sein (vgl. Fig. 6). Eine in dem Deckel 42 vorgesehene Platine 70 (vgl. Fig. 5) ist in der Batterie 10 nach oben hin ebenfalls durch eine Abdeckung 72 abgedeckt (vgl. Fig. 1).

Wie aus Fig. 6 ersichtlich, ist der Kühlmittelanschluss 30 über einen in dem endseitigen Separator 36 angeordneten Dichtring 74 an das diesem Kühlmittelanschluss 30 zugeordnete Profilteil 24 dichtsitzend angebunden. Die Anbindung des zweiten Kühlmittelanschlusses 28 an das diesem zugeordnete Profilteil 22 erfolgt in analoger Weise.

## Patentansprüche

1. Batterie für ein Fahrzeug, mit einer Mehrzahl von in einem Gehäuse (16, 18, 20) der Batterie (10) angeordneten Batteriezellen (12), und mit einer Kühleinrichtung (22, 24) zum Abführen von Wärme von den Batteriezellen (12),
wobei in einen zwischen dem Gehäuse (20) und der Kühleinrichtung (22, 24) vorgesehenen Zwischenraum ein Material (32) eingebracht ist, welches in einem Grundzustand ein erstes Volumen und in einem expandierten Zustand ein gegenüber dem ersten Volumen vergrößertes Volumen einnimmt, wobei die Kühleinrichtung (22, 24) durch das in seinen expandierten Zustand verbrachte Material (32) gegen die Batteriezellen (12) gepresst ist,
**dadurch gekennzeichnet, dass**
zumindest eine Wand (18) des Gehäuses der Batterie (10) durch Separatoren (14, 36) gebildet ist, welche die Batteriezellen (12) elektrisch voneinander isolieren, wobei durch die zumindest eine Wand (18) wenigstens ein Aufnahmeraum (20) für die Kühleinrichtung (22, 24) gebildet ist.

2. Batterie nach Anspruch 1,
**dadurch gekennzeichnet, dass**
das Material als in seinem expandierten und ausgehärteten Zustand unnachgiebiger Schaumstoff (32) ausgebildet ist.

3. Batterie nach Anspruch 1 oder 2,
**dadurch gekennzeichnet, dass**
die Kühleinrichtung wenigstens ein von einem Kühlmittel durchströmbares Profilteil (22, 24) umfasst.

4. Batterie nach Anspruch 3,
**dadurch gekennzeichnet, dass**
zwischen dem wenigstens einen Profilteil (22, 24) und einer Hülle der jeweiligen Batteriezelle (12) Wärmeleitpaste (34) und/oder ein wärmeleitender Klebstoff angeordnet ist.

5. Batterie nach Anspruch 3 oder 4,
**dadurch gekennzeichnet, dass**
das wenigstens eine Profilteil (22, 24) aus einer Aluminiumlegierung gebildet ist.

6. Batterie nach einem der Ansprüche 3 bis 5,
**dadurch gekennzeichnet, dass**
das wenigstens eine Profilteil (22, 24) aus einem zerstörungsfrei biegbaren Kunststoff gebildet ist.

7. Verfahren zum Fertigen einer Batterie (10) für ein Fahrzeug, bei welchem eine Mehrzahl von Batteriezellen (12) in einem Gehäuse (16, 18, 20) der Batterie (10) angeordnet wird, und bei welchem in dem Gehäuse (16, 18, 20) eine zum Abführen von Wärme von den Batteriezellen (12) ausgelegte Kühleinrichtung (22, 24) angeordnet wird,
wobei in einen zwischen dem Gehäuse (20) und der Kühleinrichtung (22, 24) vorgesehenen Zwischenraum ein Material (32) eingebracht wird, wobei durch eine Volumenzunahme des Materials (32) die Kühleinrichtung (22, 24) gegen die Batteriezellen (12) gepresst wird, **dadurch gekennzeichnet, dass**
zumindest eine Wand (18) des Gehäuses der Batterie (10) durch Separatoren (14, 36) gebildet ist, welche die Batteriezellen (12) elektrisch voneinander isolieren, wobei durch die zumindest eine Wand (18) wenigstens ein Aufnahmeraum (20) für die Kühleinrichtung (22, 24) gebildet ist, in welchen die Kühleinrichtung (22, 24) eingebracht wird.

## Claims

1. Battery for a vehicle, comprising a plurality of battery cells (12) arranged in a housing (16, 18, 20) of the battery (10), and having a cooling device (22, 24) for removing heat from the battery cells (12),
wherein a material (32) is introduced into a gap provided between the housing (20) and the cooling device (22, 24), said material, in a basic state, having a first volume and, in an expanded state, having a volume which is greater than the first volume, the cooling device (22, 24) being pressed against the battery cells (12) by the material (32) which has been converted into its expanded state, **characterised in that**
at least one wall (18) of the housing of the battery (10) is formed by separators (14, 36) which electrically insulate the battery cells (12) from one another, while at least one receiving space (20) for the cooling device (22, 24) is formed by the at least one wall (18).

2. Battery according to claim 1,
**characterised in that**
the material is embodied as a foam material (32) which is rigid in its expanded and hardened state.

3. Battery according to claim 1 or 2,
**characterised in that**
the cooling device comprises at least one profile part (22, 24) through which a coolant is able to flow.

4. Battery according to claim 3,
**characterised in that**
heat-conducting paste (34) and/or a heat-conducting adhesive is arranged between the at least one profile part (22, 24) and a casing of the respective battery cell (12).

5. Battery according to claim 3 or 4,
**characterised in that**
the at least one profile part (22, 24) is formed from an aluminium alloy.

6. Battery according to one of claims 3 to 5,
**characterised in that**
the at least one profile part (22, 24) is formed from a plastics material that can be non-destructively flexed.

7. Method for producing a battery (10) for a vehicle, wherein a plurality of battery cells (12) are arranged in a housing (16, 18, 20) of the battery (10), and wherein a cooling device (22, 24) designed to remove heat from the battery cells (12) is arranged in the housing (16, 18, 20),
wherein a material (32) is introduced into a gap provided between the housing (20) and the cooling device (22, 24), the cooling device (22, 24) being pressed against the battery cells (12) by an increase in the volume of the material (32), **characterised in that**
at least one wall (18) of the housing of the battery (10) is formed by separators (14, 36) which electrically insulate the battery cells (12) from one another, while at least one receiving space (20) for the cooling device (22, 24), into which the cooling device (22, 24) is placed, is formed by the at least one wall (18).

## Revendications

1. Batterie pour un véhicule, comprenant une pluralité d'éléments de batterie (12) disposés dans un carter (16, 18, 20) de la batterie (10), et comprenant un dispositif de refroidissement (22, 24) servant à dissiper la chaleur des éléments de batterie (12),
où un matériau (32) est introduit dans un espace intermédiaire prévu entre le carter (20) et le dispositif de refroidissement (22, 24), lequel matériau prend, dans un état de base, un premier volume, et, dans un état expansé, un volume plus grand par rapport au premier volume, où le dispositif de refroidissement (22, 24) est pressé par le matériau (32) amené dans son état expansé contre les éléments de batterie (12), **caractérisée en ce**
**qu'**au moins une paroi (18) du carter de la batterie (10) est formée par des séparateurs (14, 36), qui isolent électriquement les uns des autres les éléments de batterie (12), où au moins un espace de logement (20) pour le dispositif de refroidissement (22, 24) est formé par la paroi (18) au moins au nombre de une.

2. Batterie selon la revendication 1,
**caractérisée en ce**
**que** le matériau est réalisé sous la forme d'un matériau en mousse (32) rigide dans son état expansé et dans son état durci.

3. Batterie selon la revendication 1 ou 2,
**caractérisée en ce**
**que** le dispositif de refroidissement comprend au moins une partie profilée (22, 24) pouvant être parcourue par un agent réfrigérant.

4. Batterie selon la revendication 3,
**caractérisée en ce**
**qu'**une pâte thermoconductrice (34) et/ou une matière adhésive thermoconductrice sont disposées entre la partie profilée (22, 24) au moins au nombre de une et une enveloppe de l'élément de batterie (12) respectif.

5. Batterie selon la revendication 3 ou 4,
**caractérisée en ce**
**que** la partie profilée (22, 24) au moins au nombre de une est formée à partir d'un alliage d'aluminium.

6. Batterie selon l'une quelconque des revendications 3 à 5,
**caractérisée en ce**
**que** la partie profilée (22, 24) au moins au nombre de une est formée à partir d'une matière plastique pouvant être pliée sans détérioration.

7. Procédé servant à produire une batterie (10) pour un véhicule, dans le cadre duquel une pluralité d'éléments de batterie (12) sont disposés dans un carter (16, 18, 20) de la batterie (10), et dans le cadre duquel un dispositif de refroidissement (22, 24) mis au point pour dissiper la chaleur des éléments de batterie (12) est disposé dans le carter (16, 18, 20),
où un matériau (32) est introduit dans un espace intermédiaire prévu entre le carter (20) et le dispositif de refroidissement (22, 24), où le dispositif de refroidissement (22, 24) est pressé contre les éléments de batterie (12) par une augmentation de volume du matériau (32),
**caractérisé en ce**
**qu'**au moins une paroi (18) du carter de la batterie (10) est formée par des séparateurs (14, 36), lesquels isolent électriquement les uns des autres les éléments de batterie (12), où au moins un espace de logement (20) pour le dispositif de refroidissement (22, 24) est formé par la paroi (18) au moins au nombre de une, le dispositif de refroidissement (22, 24) étant introduit dans ledit espace de logement.
